# EUROPÄISCHE PATENTANMELDUNG

(11) **EP 1 978 620 A2**
(43) Veröffentlichungstag der Anmeldung: **08.10.2008**
(21) Anmeldenummer: 08006721.8
(22) Anmeldetag: 14.04.2008
(51) Int. Cl.: H02K 1/27

(54) **Anordnung zur Befestigung von Magneten auf Rotoren von permanent erregten Synchronmaschinen**

(30) Priorität: 04.04.2007 DE 102007016771
(71) Anmelder: ESW GmbH, 22880 Wedel (DE)
(72) Erfinder: Schiffarth, Markus, Dr., 58331 Schwelm (DE); Möller, Lothar, 46047 Oberhausen (DE); Grünhagen, Thomas, 42549 Velbert (DE)
(74) Vertreter: Freitag, Joachim

(57) **Zusammenfassung**

Die Erfindung betrifft eine Anordnung zur Befestigung von Magneten auf Rotoren von permanent erregten Synchronmaschinen, insbesondere bei schnell drehenden Maschinen unter Berücksichtigung der extremen Fliehkräfte.

Die Aufgabe der Erfindung, eine neue Möglichkeit zur Befestigung von Permanentmagneten auf Rotoren von schnell laufenden permanenterregten Synchronmaschinen zu finden, mit der die Magnete auch bei hohen Drehzahlen zuverlässig und dauerhaft gegen Unwucht erzeugendes Abheben am Rotor gesichert werden, wird erfindungsgemäß gelöst, indem die Magnete (2) an der Rotorwelle (1) in Führungsnuten (11) radial beweglich und durch eine unmagnetische Bandage (3) an der Peripherie kraftschlüssig gehaltert sind, die Bandage (3) mittels zweier stirnseitiger Endkappen (4) zentrisch mit der Rotorwelle (1) verbunden ist, und die Endkappen (4) in radialer Richtung elastisch aufweitbar sind, so dass sie die Bandage (3) auch in einem radial abgehobenen Zustand der Magnete (2) bei hohen Drehzahlen der Rotorwelle (1) zentrisch zur Rotorachse (12) halten.

## Beschreibung

Die Erfindung betrifft eine Anordnung zur Befestigung von Magneten auf Rotoren von permanent erregten Synchronmaschinen, insbesondere bei schnell drehenden Maschinen unter Berücksichtigung der extremen Fliehkräfte.

Im Stand der Technik sind Lösungen bekannt geworden, bei denen die Permanentmagnete entweder mittels eines Klebers auf einem weichmagnetischen Läufer befestigt sind oder die Fixierung der Magnete auf der Welle durch eine vorgespannte, unmagnetische äußere Ummantelung (Bandage) erreicht wird.

Die erste Methode wird begrenzt durch die verringerte Haltekraft von Klebstoffen bei betriebsbedingt erhöhten Temperaturen und gleichzeitig hoher Beanspruchung durch Fliehkräfte bei hohen Drehzahlen. Deshalb werden entweder ein vergrößerter Luftspalt zur Berücksichtigung der Fliehkraftverformung des Klebers oder zusätzliche Sicherungsmaßnahmen für die Magnete (z.B. eine Bandage) erforderlich.

Die zweite Methode erfordert für hohe Drehzahlen eine aufwendige und zumeist dicke Bandage, um die erforderliche Vorspannung in allen Betriebspunkten zu gewährleisten und ein undefiniertes Abheben der Magnete von der Läuferwelle zu verhindern. Das Abheben der Magnete ist regelmäßig deshalb nicht zu verhindern, weil eine elastische Bandage verwendet wird, um sie auf den Läufer aufziehen zu können. Reicht die Vorspannung dann bei hohen Fliehkräften nicht aus, um alle Magnete fest auf die Welle zu pressen, so können einzelne Magnete im Betrieb abheben und zu einer extremen Unwucht des Läufers führen.

Andererseits wird durch eine große Bandagendicke der magnetische "Luftspalt" vergrößert, so dass sich der Wirkungsgrad der elektrischen Maschine entscheidend verringert. Außerdem ist das Aufbringen von Bandagen mit hoher Vorspannkraft mit einem extrem hohen Fertigungsaufwand verbunden.

Der Erfindung liegt die Aufgabe zugrunde, eine neue Möglichkeit zur Befestigung von Permanentmagneten auf Rotoren von schnell laufenden permanenterregten Synchronmaschinen zu finden, mit der die Magnete auch bei hohen Drehzahlen zuverlässig und dauerhaft gegen ein durch die Fliehkraft verursachtes, Unwucht erzeugendes Abheben am Rotor gesichert werden.

Erfindungsgemäß wird die Aufgabe bei einer Anordnung zur Befestigung von Magneten auf dem Rotor einer permanentmagnetisch erregten Synchronmaschine, bei der der Rotor mehrere am Außenumfang einer weichmagnetischen Rotorwelle befindliche Permanentmagnete aufweist, wobei die Magnete durch eine unmagnetische Bandage kraftschlüssig an der Peripherie der Rotorwelle gehaltert sind, dadurch gelöst, dass die Magnete an der Rotorwelle in Führungsnuten radial beweglich gehaltert sind, dass die Bandage mittels zweier stirnseitiger Endkappen zentrisch mit der Rotorwelle verbunden ist, und dass die Endkappen in radialer Richtung elastisch aufweitbar sind, so dass sie die Bandage auch in einem radial abgehobenen Zustand der Magnete bei hohen Drehzahlen der Rotorwelle zentrisch zur Rotorachse halten.

Vorteilhaft bestehen die Endkappen aus einem Innen- und einem Außenring und weisen eine rotationssymmetrisch ausgeprägte Kontur auf, um die einfache radiale Aufweitung unter gleichzeitiger Beibehaltung der Konzentrizität von Innen- und Außenring zu ermöglichen. Die rotationssymmetrisch ausgeprägten Konturen weisen zweckmäßig definiert eingebrachte Materialschwächungen auf, um die radiale Aufweitung unter gleichzeitiger Beibehaltung der Konzentrizität zu erleichtern.

In einer zweiten vorteilhaften Gestaltungsform bestehen die Endkappen aus einem Innen- und einem Außenring, die durch radial ausgerichtete Stege miteinander verbunden sind.
Dabei sind die Stege zweckmäßig aus reversible dehnbarem Material geformt.
Um die radiale Längenänderung der Stege zu erleichtern, sind diese vorteilhaft innerhalb einer Radialebene leicht schräg am Innen- und Außenring angebracht. In einer anderen zweckmäßigen Variante sind die Stege in axialer Richtung leicht schräg zwischen Innen- und Außenring angebracht.

Die Endkappen werden an den beiden Endbereichen der Bandage zweckmäßig formschlüssig befestigt. Sie können aber auch vorteilhaft stoffschlüssig an beiden Endbereichen der Bandage befestigt sein, wobei bevorzugt eine der stoffschlüssigen Verbindungen von Schweißen, Löten und Kleben zum Einsatz kommt.

Um bei hohen Drehzahlen der Rotorwelle ein definiertes radiales Abheben und Rückführen der Magnete innerhalb der fliehkraftgedehnten Bandage zu ermöglichen, sind in die Rotorwelle vorteilhaft Rotornuten mit parallelen Flanken eingebracht, die als Führungsnuten zur definierten radialen Führung der Magnete vorgesehen sind.

In einer vorteilhaften Gestaltung der radialen Magnetführungen weist die Rotorwelle Rotornuten mit radial auswärts konvergierenden Flanken auf, in die unmagnetische Führungskeile formschlüssig eingebracht sind, wobei die Führungskeile mit radial auswärts divergierenden Gleitflächen derart versehen sind, dass die Gleitflächen benachbarter Führungskeile parallele Führungsnuten zur definierten radialen Führung der Magnete bilden.
In einer alternativen Ausgestaltung der radialen Führungen sind die unmagnetischen Führungskeile an der Rotorwelle stoffschlüssig angebracht, wobei die Führungskeile in gleicher Art und Weise mit radial auswärts divergierenden Gleitflächen zur radialen Führung der Magnete ausgebildet sind.

Die Erfindung basiert auf der Grundüberlegung, dass zur kostengünstigen Befestigung von Permanentmagneten auf Rotoren selbsterregter Synchronmaschinen für hohe Drehzahlen Befestigungen mit mechanisch formschlüssigen Verriegelungen oder Klebern problematisch sind. Das resultiert daraus, dass die Magnete infolge der zunehmenden Fliehkräfte aufgrund von Fertigungstoleranzen (z.B. Kleberschichtdicke bzw. Keilführungen) sich unterschiedlich stark von der Rotorachse entfernen und zu erheblichen Unwuchten führen können. Fertigungstechnisch einfacher dimensionierbare Bandagen, die mit Vorspannung auf den magnetbestückten Rotor aufgezogen werden, haben den Vorteil, dass die fliehkraftbedingte Dehnung geeignet dimensioniert werden kann, jedoch ein unterschiedliches Abheben der Magnete ebenfalls zu unerwünschten Unwuchten führen kann. Die Erfindung löst dieses Problem, indem für die Magnete geeignete Gleitführungen an der Rotorwelle für gleiche Bedingungen des fliehkraftbedingten Abhebens der Magnete innerhalb einer Bandage vorgesehen sind und stabile rotationssymmetrische, jedoch radial dehnbare Endkappen an den Stirnseiten der Bandage für deren konzentrische Halterung auch bei hohen Drehzahlen sorgen. Die vorzugsweise unmagnetischen Endkappen sind bezüglich des Außendurchmessers durch ein einfaches rotationssymmetrisch in die Endkappen eingeprägtes Profil dehnbar gestaltet, d.h. die Endkappen weisen entlang wenigstens eines konzentrischen Kreisringes eine Materialschwächung auf, die eine Dehnung an der Endkappenperipherie zulässt, um eine Dehnung der Bandage ausschließlich konzentrisch zur Rotorachse zu ermöglichen.

Mit der erfindungsgemäßen Anordnung ist es möglich, Permanentmagnete auf Rotoren von schnell laufenden permanenterregten Synchronmaschinen so zu befestigen, dass auch größere Magnete bei extrem hohen Drehzahlen zuverlässig gegen durch die Fliehkraft verursachte Krafteinwirkungen am Rotor so gesichert sind, dass ein Unwucht erzeugendes Abheben einzelner Magnete verhindert wird, ohne dass zusätzliche Aufwände für die Bandage notwendig werden.

Die Erfindung soll nachstehend anhand von Ausführungsbeispielen näher erläutert werden. Die Zeichnungen zeigen:
- Fig. 1:: eine Prinzipansicht der erfindungsgemäßen Anordnung in einem Axialschnitt des Rotors einer (permanentmagnetisch) selbsterregten Synchronmaschine,
- Fig. 2:: eine Darstellung des Rotorquerschnitts der selbsterregten Synchronmaschine im Ruhezustand,
- Fig. 3:: eine Darstellung des Rotorquerschnitts mit abgehobenen Magneten bei hohen Drehzahlen,
- Fig. 4:: eine Darstellung des Rotoraxialschnitts mit abgehobenen Magneten bei hohen Drehzahlen,
- Fig. 5:: verschiedene elastische Ausführungsformen a), b) und c) der erfindungsgemäßen stirnseitigen Endkappen für die Rotorbandage in Axialschnittdarstellung,
- Fig. 6:: weitere elastische Ausführungsformen a) und b) von erfindungsgemäßen stirnseitigen Endkappen der Rotorbandage in einer axialen Draufsicht,
- Fig. 7:: eine Darstellung des Rotorquerschnitts mit vergrößerten Gleitflächen für das radiale Abheben der Magnete durch formschlüssig in Rotornuten verankerte Führungskeile.

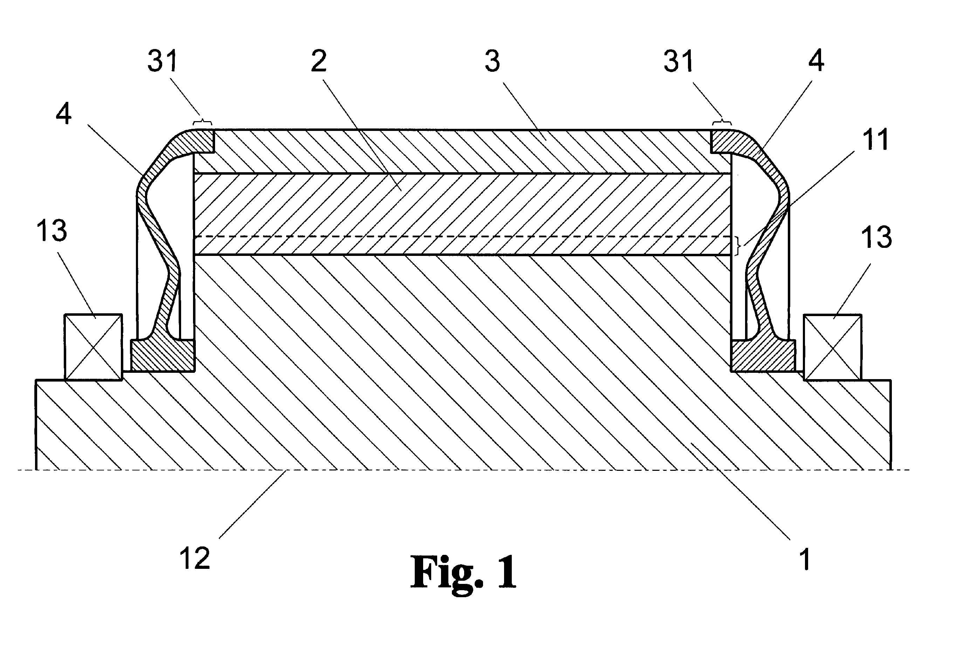

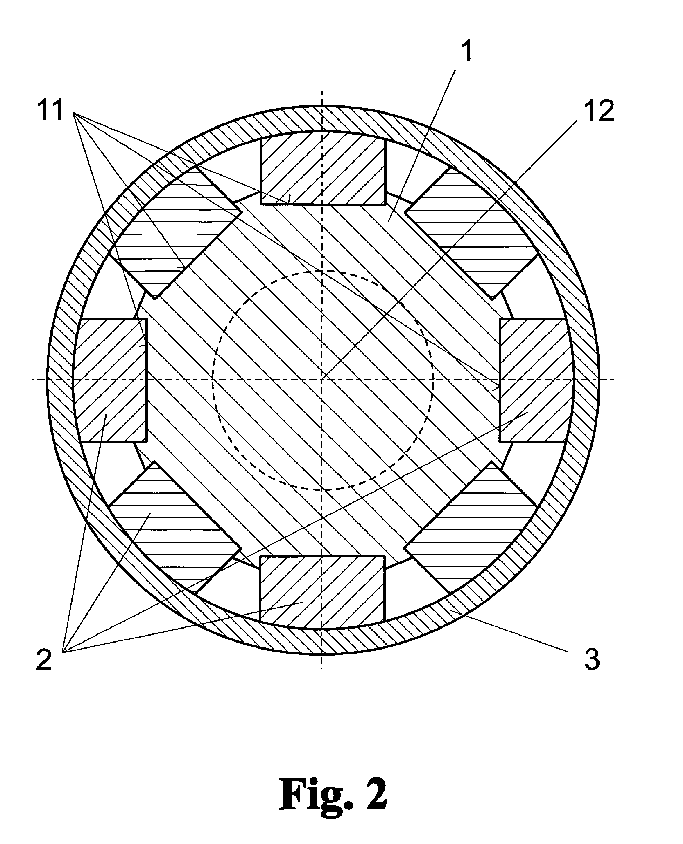

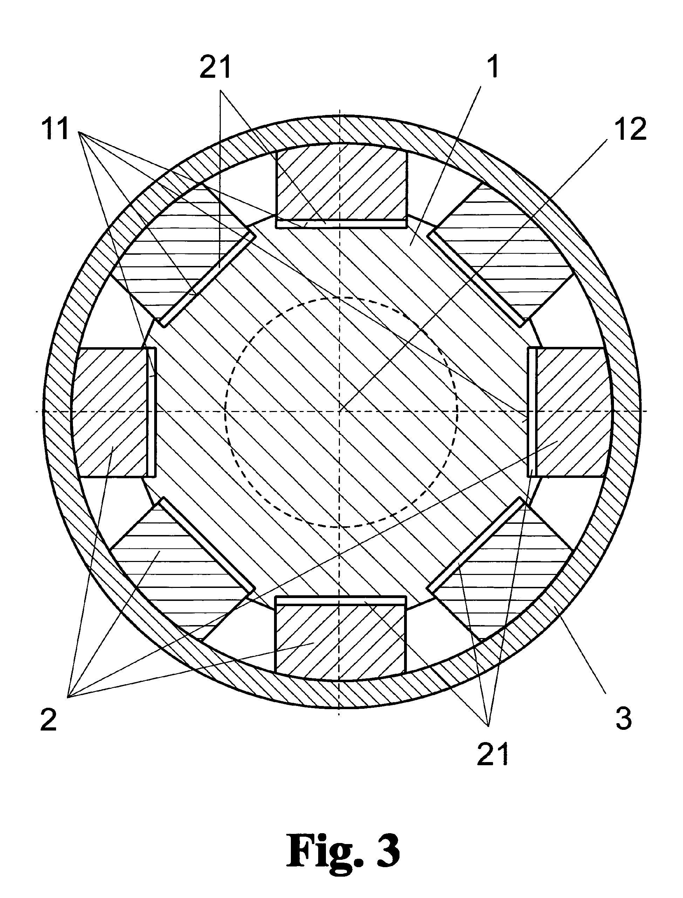

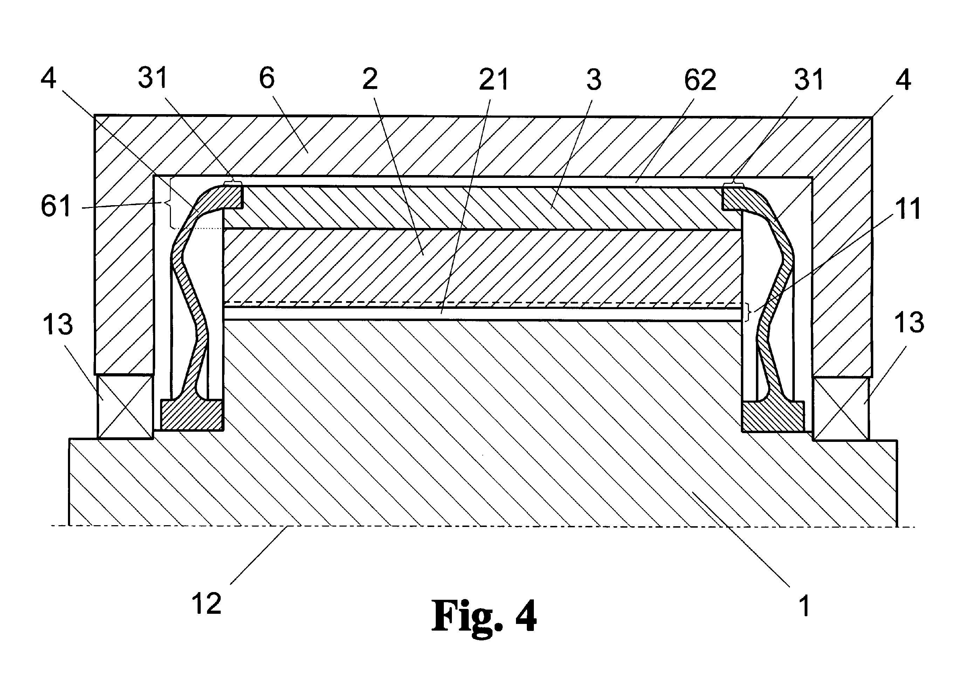

Die erfindungsgemäße Anordnung besteht bei einer schnell drehenden elektrischen Maschine - wie aus der Zusammenschau von Fig. 1 und Fig. 2 zu erkennen - aus mehreren am Außenumfang einer Rotorwelle 1 befindlichen Magneten 2, die durch eine unmagnetische Bandage 3 kraftschlüssig auf der weichmagnetischen Rotorwelle 1 gehalten sind. Dabei sind die Magnete 2 in Führungsnuten - in diesem Beispiel als Rotornuten 11 ausgeführt - eingepasst, so dass sich die Magnete 2 ausschließlich in radialer Richtung bewegen können, und die Bandage 3 wird mittels zweier Endkappen 4 zentrisch zur Rotorwelle 1 fixiert. Die Endkappen 4 sind so gestaltet, dass sie in radialer Richtung relativ leicht aufzuweiten sind. Das geschieht durch eine geeignet rotationssymmetrische eingeprägte Kontur 43, die vorzugsweise entlang wenigstens eines konzentrischen Kreisrings der Endkappe 4 Materialschwächungen 44 aufweist. Dadurch stellt die Geometrie der Endkappen 4 sicher, dass die Bandage 3 die Magnete 2 - auch bei infolge hoher Drehzahl abgehobener Position - zentrisch zur Achse 12 der Rotorwelle 1 hält (siehe Fig. 3).
Die Endkappen 4 zentrieren die Bandage 3 an den beiden Endbereichen 31 formschlüssig durch einen überlappenden Materialring (wie Fig. 1 und 4 deutlich zu sehen).
Sie können aber auch (ggf. zusätzlich) unlösbar mit den beiden Endbereichen 31 der Bandage 3 verbunden sein, indem die Verbindung stoffschlüssig (durch Schweißen, Löten, Kleben etc.) erfolgt.

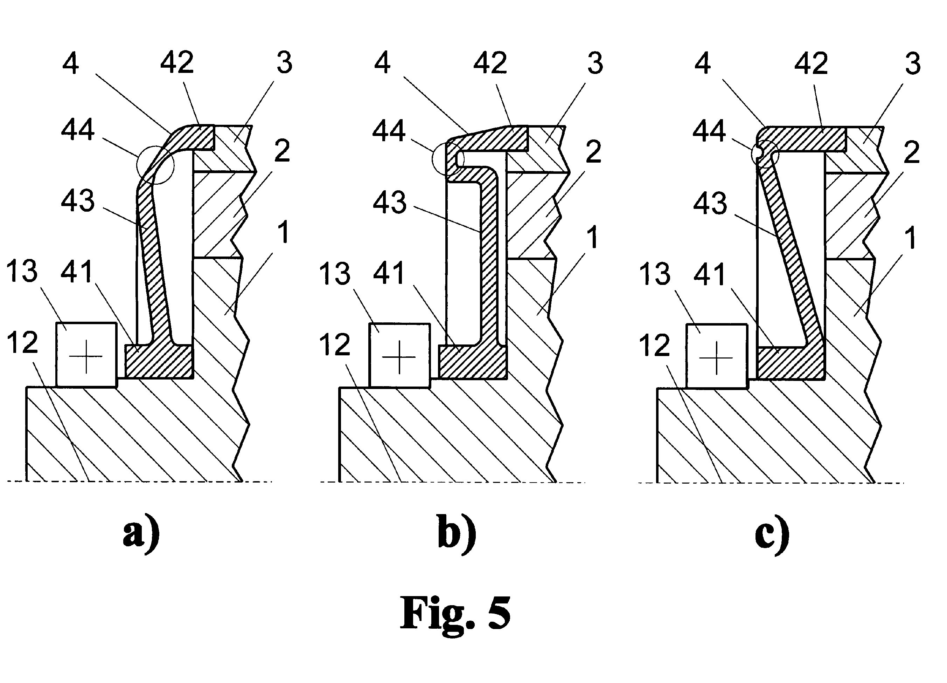

Die Endkappen 4 können verschiedenste rotationssymmetrische Formen aufweisen, von denen drei mögliche Konturen 43 in Fig. 5 als Profilschnitte a, b und c dargestellt sind. Die Endkappen 4 bestehen dabei prinzipiell aus einem Innenring 41, der auf der Rotorwelle 1 sitzt, und einem Außenring 42, der den Endbereich 31 der Bandage 3 fixiert. Mit definiert eingebrachten Materialschwächungen 44 im Randbereich der Endkappen 4, wie sie in allen Profilschnitten a, b und c erkennbar sind, wird eine einfache radiale Aufweitung des Außenrings 42 bei gleichzeitiger Konzentrizität von Innen- und Außenring 41 und 42 ermöglicht.

Als Material für die Endkappen 4 und die Bandage 3 werden vorzugsweise nicht magnetisierbare, metallische Werkstoffe, wie Aluminium, Edelstahl oder Titan verwendet. Es können aber auch Verbundwerkstoffe (z.B. GFK - glasfaserverstärkte Kunststoffe oder CFK - carbonfaserverstärkte Kunststoffe) zum Einsatz kommen.
Metallische Bandagen 3 müssen so dimensioniert werden, dass sie die maximal auftretenden Fliehkräfte im Bereich der elastischen Materialverformung aufnehmen können. Da die Bandage 3 ein Abheben der Magnete 2 von der Welle 1 bei höheren Drehzahlen nicht unbedingt verhindern muss, kann die Bandage 3 ohne große Vorspannung über die Magnete 2 gezogen werden. Bei GFK- und CFK-Materialien können die Bandagen 3 ohne oder mit nur geringer Vorspannung um die Magnete 2 gewickelt werden.

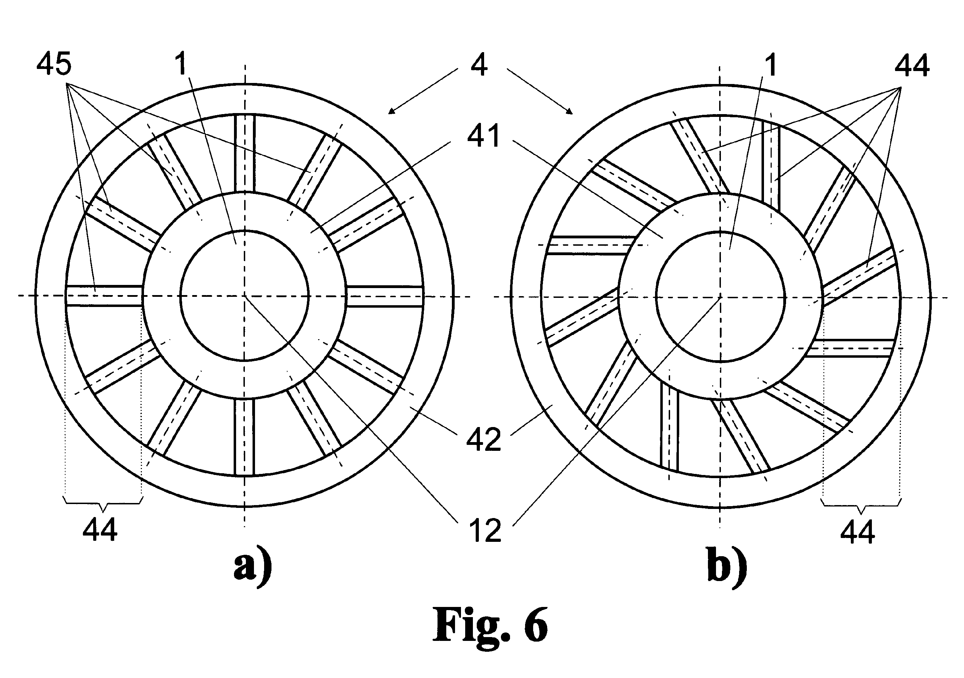

Fig. 6 zeigt zwei weitere Ausgestaltungen der Endkappen 4, bei denen Innenring 41 und Außenring 42 durch radiale Stege 45 miteinander verbunden sind, die als konzentrische Materialschwächung 44 fungieren. Bei der Gestaltungsform gemäß Fig. 6a sind die Stege 45 so geformt, dass sie sich bei größeren Fliehkräften elastisch in ihrer Länge ausdehnen können und somit eine zentrische radiale Aufweitung des Außenrings 42 ermöglichen.
Um die Zugkräfte in den Stegen 45 und eventuelle plastische Verformungen zu reduzieren, werden die Stege 45 vorzugsweise durch Schrägstellung längenvariabel gestaltet. Das ist einerseits durch Schrägstellung in Richtung der Rotorachse 12 - analog zu den Konturen in Fig. 5a) und c) - möglich oder wird andererseits erreicht, indem die Stege 45 - wie in Fig. 6b dargestellt - innerhalb einer Radialebene leicht schräg an Innen- und Außenring 41 und 42 angreifen.

Um den auf der Rotorwelle 1 angebrachten Magneten 2 ein definiertes radiales Abheben bei großen Drehzahlen und eine Rückkehr in die Ausgangsposition bei geringeren Drehzahlen zu erlauben und zugleich die Übertragung des Antriebsdrehmoments von den Magneten 2 auf die Rotorwelle 1 zu gewährleisten, sind an der Rotorwelle 1 Führungsnuten mit parallelen Flanken für eine definierte radiale Führung der Magnete 2 vorgesehen.

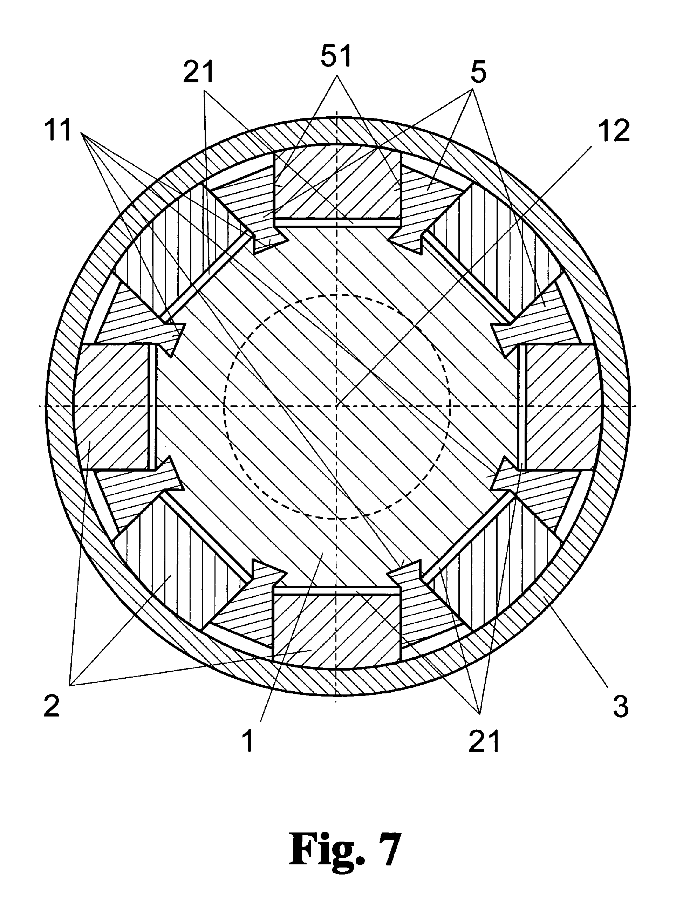

Die Führungsnuten sind entweder als Rotornuten 11 (siehe z.B. Fig. 2 und 3) direkt in die Rotorwelle 1 eingebracht oder werden dadurch geschaffen, dass unmagnetische Führungskeile 5 (gemäß Fig. 7) an der Rotorwelle 1 befestigt sind. In letzterem Fall werden die Magnete 2 jeweils mit einem Führungskeil 5 auf Abstand gehalten und zwischen zwei benachbarten Führungskeilen 5, die zueinander parallele Gleitflächen 51 aufweisen, radial geführt.
Die Führungskeile 5 können zur Kraftübertragung formschlüssig oder stoffschlüssig mit der Rotorwelle 1 verbunden sein. Sie übertragen das Antriebsdrehmoment von den Magneten 2 auf die Rotorwelle 1 in gleicher Weise wie die direkten Führungen der Rotornuten 11 (gemäß Fig. 2 und 3). Wie in Fig. 7 zu sehen ist, werden jedoch durch in die Rotorwelle 1 eingesetzte Führungskeile 5 mit längeren Gleitflächen 51 erheblich größere Führungsnuten für das radiale Abheben der Magnete 2 bei großen Drehzahlen und deren Rückkehr in die Ausgangspositionen bei geringeren Drehzahlen zur Verfügung gestellt. Dadurch wird ein unerwünschtes Verkanten einzelner Magnete 2, das zu einer Unwucht an der Rotorwelle 1 führen könnte, verringert.
Bei der Wahl der formschlüssigen Befestigung der nicht magnetischen Führungskeile 5, wie sie in Fig. 7 gezeigt ist, wird außerdem eine Anordnung geschaffen, bei der das weichmagnetische Material der Rotorwelle 1 zwischen den Magneten 2 nicht so weit an die Peripherie des Rotors reicht, so dass der Wirkungsgrad der Maschine nicht unnötig verschlechtert wird.

Mittels einer mit Vorspannung aufgezogenen Bandage 3 werden die Magnete 2 auf der in Lagern 13 geführten Rotorwelle 1 fixiert (Fig. 2 - Rotor im Stillstand). Aufgrund der nur geringen Vorspannung kann die Bandage 3 mit sehr geringem Aufwand montiert werden und wird an ihren beiden Endbereichen 31 von Endkappen 4 mit einem geringen radialen Verformungswiderstand konzentrisch zur Rotorwelle 1 elastisch gehalten.

Mit zunehmender Drehzahl werden die Magnete 2 durch die auftretenden Fliehkräfte radial nach außen gedrückt. Die Fliehkräfte, die auf die Magnete 2 wirken und auf die Bandage 3 übertragen werden, führen zu einer allmählichen Aufweitung der Bandage 3, so dass die Magnete 2 bei hohen Drehzahlen abheben und sich zwischen Rotorwelle 1 und Magneten 2 ein kleiner Luftspalt 21 ergibt (siehe Fig. 3 und Fig. 4).

Die beiden Endkappen 4 sorgen durch ihre rotationssymmetrische Form und die relativ leichte radiale Verformbarkeit dafür, dass die Magnete 2 auch im geweiteten Zustand der Bandage 3 immer zentrisch zur Rotorachse 12 bleiben. Dadurch werden auch bei größeren Drehzahlen extreme Unwuchten vermieden.

Der mechanische Luftspalt 62 gegenüber dem Stator 6 kann relativ eng bemessen werden, indem für die maximal zulässige Drehzahl der Außendurchmesser der gedehnten Bandage 3 zugrunde gelegt wird. Der für die Leistung und den Wirkungsgrad maßgebende magnetische "Luftspalt" 61 besteht aus dem mechanischen Luftspalt 62 und der Dicke der Bandage 3. Da die Bandage 3 im Vergleich zum mechanischen Luftspalt 62 in der Regel relativ dick ist, führt die Veränderung des mechanischen Luftspaltes 62 nur zu einer geringfügigen Veränderung des magnetischen "Luftspaltes" 61 und der Systemleistung.

Das Maß der Aufweitung der Bandage 3 bei der geforderten maximalen Drehzahl wird dabei durch Material und Dicke der Bandage 3 bestimmt und muss nur entsprechend berücksichtigt werden. Somit kann die Erfindung auch für Maschinen mit sehr hohen Drehzahlen angepasst werden, ohne dass bei solchen erhöhten Drehzahlen für die Bandage 3 ein zusätzlicher Fertigungsaufwand zur Verminderung des Unwuchtrisikos erforderlich wäre.

### Bezugszeichenliste

- 1: Rotorwelle
- 11: Rotornut
- 12: (Rotor-)Achse
- 13: (Rotor-)Lager

- 2: Magnet (Permanentmagnet)
- 21: Luftspalt

- 3: Bandage
- 31: Endbereich

- 4: Endkappe
- 41: Innenring
- 42: Außenring
- 43: Kontur
- 44: Materialschwächung
- 45: Steg

- 5: Führungskeil
- 51: (verlängerte) Gleitfläche

- 6: Stator
- 61: magnetischer "Luftspalt"
- 62: mechanischer Luftspalt

## Patentansprüche

1. Anordnung zur Befestigung von Magneten auf dem Rotor einer permanentmagnetisch erregten Synchronmaschine, bei der der Rotor mehrere am Außenumfang einer weichmagnetischen Rotorwelle befindliche Permanentmagnete aufweist, wobei die Magnete durch eine unmagnetische Bandage kraftschlüssig an der Peripherie der Rotorwelle gehaltert sind, **dadurch gekennzeichnet, dass**
- die Magnete (2) an der Rotorwelle (1) in Führungsnuten (11; 51) radial beweglich gehaltert sind,
- die Bandage (3) mittels zweier stirnseitiger Endkappen (4) zentrisch mit der Rotorwelle (1) verbunden ist, und
- die Endkappen (4) in radialer Richtung elastisch aufweitbar sind, so dass sie die Bandage (3) auch in einem radial abgehobenen Zustand der Magnete (2) bei hohen Drehzahlen der Rotorwelle (1) zentrisch zur Rotorachse (12) halten.

2. Anordnung nach Anspruch 1, **dadurch gekennzeichnet, dass**
die Endkappen (4) aus einem Innenring (41) und einem Außenring (42) bestehen und eine rotationssymmetrisch geprägte Kontur (43) aufweisen, um die einfache radiale Aufweitung unter gleichzeitiger Beibehaltung der Konzentrizität von Innen- und Außenring (41, 42) zu ermöglichen.

3. Anordnung nach Anspruch 2, **dadurch gekennzeichnet, dass**
die rotationssymmetrisch geprägten Konturen (43) gezielt eingebrachte Materialschwächungen (44) aufweisen, um die radiale Aufweitung unter gleichzeitiger Beibehaltung der Konzentrizität zu erleichtern.

4. Anordnung nach Anspruch 1, **dadurch gekennzeichnet, dass**
die Endkappen (4) aus einem Innenring (41) und einem Außenring (42) bestehen, die durch radial ausgerichtete Stege (45) miteinander verbunden sind.

5. Anordnung nach Anspruch 4, **dadurch gekennzeichnet, dass**
die Stege (45) aus reversibel dehnbarem Material geformt sind.

6. Anordnung nach Anspruch 4, **dadurch gekennzeichnet, dass**
die Stege (45) innerhalb einer Radialebene leicht schräg am Innen- und Außenring (41, 42) angebracht sind.

7. Anordnung nach Anspruch 4, **dadurch gekennzeichnet, dass**
die Stege (44) in axialer Richtung leicht schräg am Innen- und Außenring (41, 42) angebracht sind.

8. Anordnung nach Anspruch 1, **dadurch gekennzeichnet, dass**
die Endkappen (4) an beiden Endbereichen der Bandage (3) formschlüssig befestigt sind.

9. Anordnung nach Anspruch 1, **dadurch gekennzeichnet, dass**
die Endkappen (4) an beiden Endbereichen der Bandage (3) stoffschlüssig befestigt sind.

10. Anordnung nach Anspruch 9, **dadurch gekennzeichnet, dass**
die Endkappen (4) an beiden Endbereichen der Bandage (3) durch eine der stoffschlüssigen Verbindungen Schweißen, Löten und Kleben befestigt sind.

11. Anordnung nach Anspruch 1, **dadurch gekennzeichnet, dass**
die Rotorwelle (1) Rotornuten (11) mit parallelen Flanken aufweist, die als Führungsnuten zur radialen Führung der Magnete (2) vorgesehen sind.

12. Anordnung nach Anspruch 1, **dadurch gekennzeichnet, dass**
die Rotorwelle (1) Rotornuten (11) mit radial auswärts konvergierenden Flanken aufweist, in die unmagnetische Führungskeile (5) formschlüssig eingeführt sind, wobei die Führungskeile (5) derart mit radial auswärts divergierenden Gleitflächen (51) versehen sind, dass die Gleitflächen (51) benachbarter Führungskeile (5) parallele Führungsnuten zur radialen Führung der Magnete (2) bilden.

13. Anordnung nach Anspruch 1, **dadurch gekennzeichnet, dass**
an der Rotorwelle (1) unmagnetische Führungskeile (5) stoffschlüssig angebracht sind, wobei die Führungskeile (5) derart mit radial auswärts divergierenden Gleitflächen (51) versehen sind, dass die Gleitflächen (51) benachbarter Führungskeile (5) parallele Führungsnuten zur radialen Führung der Magnete (2) bilden.
